# EUROPEAN PATENT SPECIFICATION

(11) **EP 4 580 223 B1**
(45) Date of publication and mention of the grant of the patent: **07.10.2026**
(21) Application number: 24208053.9
(22) Date of filing: 22.10.2024
(51) Int. Cl.: H04W 4/06, H04W 4/50, H04N 23/60, H04N 23/661, H04L 41/0806, H04L 41/08, H04L 41/0893, H04W 4/08, H04W 4/38, H04W 4/80

(54) **AUTOMATIC CONFIGURATION METHOD AND AUTOMATIC CONFIGURATION SYSTEM**
AUTOMATISCHES KONFIGURATIONSVERFAHREN UND AUTOMATISCHES KONFIGURATIONSSYSTEM
PROCÉDÉ DE CONFIGURATION AUTOMATIQUE ET SYSTÈME DE CONFIGURATION AUTOMATIQUE

(30) Priority: 26.12.2023 TW 112150715
(43) Date of publication of application: 02.07.2025
(73) Proprietor: Getac Technology Corporation, New Taipei City 221009 (TW)
(72) Inventor: HOU, Kai-Chung, 11568 Taipei City (TW)
(74) Representative: Viering, Jentschura & Partner mbB Patent- und Rechtsanwälte

(56) References cited:
- US-A1- 2013 339 438
- US-A1- 2015 013 015
- US-B1- 9 197 429

## Description

### FIELD OF THE INVENTION

The present invention relates to a method and a system, and more particularly to an automatic configuration method and an automatic configuration system capable of performing automatic configuration and group control for multiple slave devices.

### BACKGROUND OF THE INVENTION

In existing commercial body cameras, various wireless transmission modules are configured to exchange data remotely, thereby achieving the purpose of remote operation. Based on technical principles, the wireless transmission modules can be divided into two types of implementation depending on whether a connection is established, namely, a connection-oriented implementation and a connectionless implementation. The connection-oriented body cameras utilize techniques such as BLUETOOTH, WI-FI, and 4th Generation Long-Term Evolution (4G LTE), and the connectionless body cameras utilize techniques such as iBeacon and User Datagram Protocol (UDP).

The difference between the connection-oriented body cameras and the connectionless body cameras is that the connection-oriented ones require devices endpoints to establish an end-to-end connection, either directly or through relay devices, to communicate in a one-to-one or many-to-many architecture. The connectionless ones broadcast or listen to either specific wireless channels or specific network addresses (IP:Port), to achieve the purpose of data exchanging and communication.

However, under the communication architecture adopted by the existing body cameras, if the body cameras need to be configured in groups, the devices need to be manually set one by one, which is not only time-consuming but also inconvenient for operators thereof.

US 20130339438 A1 discloses methods and devices for communicating in a communication system, in particular, methods and devices for group-based access control of machine-to-machine devices for wireless communication are described. One method includes forming a machine-to-machine (M2M) group identifier based on a M2M service category. The method further includes associating the M2M group identifier with at least one wireless device. The method further includes transmitting data intended for receipt by the M2M group, the data including the M2M group identifier.

### SUMMARY OF THE INVENTION

The present invention is defined in the appended claims.

In response to the above-referenced technical inadequacies, the present invention provides an automatic configuration method and an automatic configuration system capable of performing automatic configuration and group control for multiple slave devices.

In order to solve the above-mentioned problems, one of the technical aspects adopted by the present invention is to provide an automatic configuration method, including: configuring a master device to broadcast a specific data packet according to a target group list, in which the target group list divides a plurality of slave devices into one or more groups; configuring each of the plurality of slave devices to, in response to receiving the specific data packet and determining that the specific data packet is related thereto, automatically send identification data; configuring the master device to generate a list according to the identification data; and configuring the master device to communicatively connect with each of the plurality of slave devices that have responded to the specific data packet according to the list.

In order to solve the above-mentioned problems, another one of the technical aspects adopted by the present invention is to provide an automatic configuration system, which includes a master device and a plurality of slave devices. The master device is configured to broadcast a specific data packet according to a target group list. The plurality of slave devices are divided into one or more groups according to the target group list, and each of the plurality of slave devices is configured to automatically send identification data in response to receiving the specific data packet and determining that the specific data packet is related thereto. The master device is configured to generate a list according to the identification data, and communicatively connect with each of the plurality of slave devices that have responded to the specific data packet according to the list.

These and other aspects of the present invention will become apparent from the following description of the embodiment taken in conjunction with the following drawings and their captions, although variations and modifications therein may be affected without departing from the scope of the invention as defined in the appended claims.

### BRIEF DESCRIPTION OF THE DRAWINGS

The described embodiments may be better understood by reference to the following description and the accompanying drawings, in which:
FIG. 1 is a functional block diagram of an automatic configuration system according to one embodiment of the present invention;
FIG. 2 is a flowchart of an automatic configuration method according to one embodiment of the present invention;
FIG. 3 is a signal transmission flowchart of the automatic configuration method according to one embodiment of the present invention; and
FIG. 4 is a detailed flowchart of step S12.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated upon or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

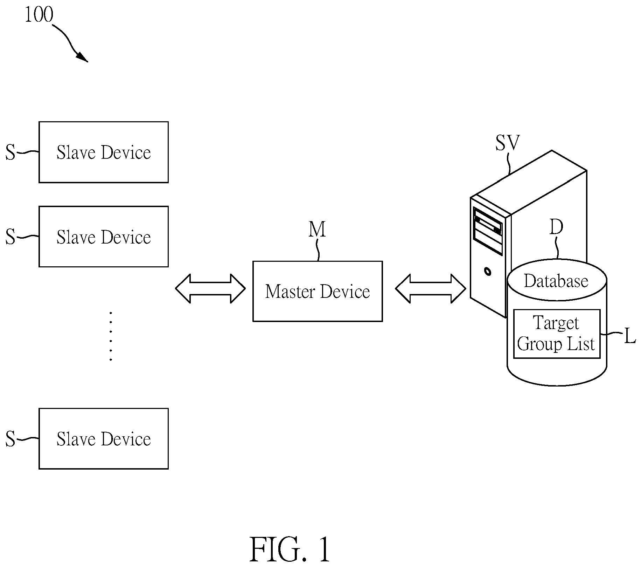

FIG. 1 is a functional block diagram of an automatic configuration system according to one embodiment of the present invention. Referring to FIG. 1, one embodiment of the present invention provides an automatic configuration system 100, including a master device M and a plurality of slave devices S. The automatic configuration system 100 of the present invention mainly utilizes multiple slave devices S for real-time monitoring using wireless broadcasting technology, and cooperates with a specific hardware-and-software integrated design of the master device M to achieve the purpose of filtering more than one specific device. The automatic configuration system 100 can also perform automatic configuration in groups to suit specific situations without the need for manual setting and controlling one by one.

The master control device M can be an electronic device such as a smart phone, a desktop computer, a laptop computer, and a tablet computer. In addition to including a display, a processor and a memory, the master device M can also have a communication circuit supporting wireless and wired communication for communicating with the slave devices S and connecting to the Internet.

The slave device S can be, for example, an image/video capturing device, such as a camera, a camcorder, a body camera, and the like, and the slave device S can include a wireless communication circuit that supports a variety of wireless communication standards, such as Bluetooth, WI-FI, and the fourth generation long-term evolution technology (4G LTE), for communicatively connecting with the master device M.

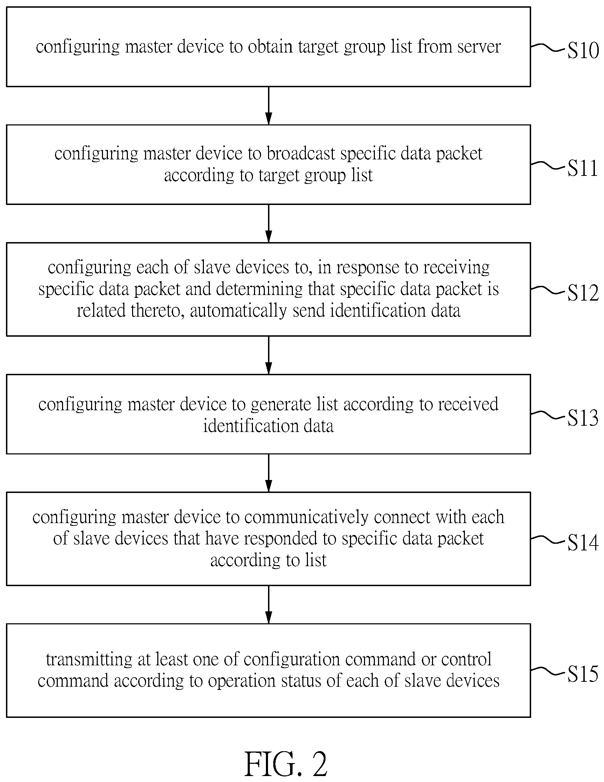

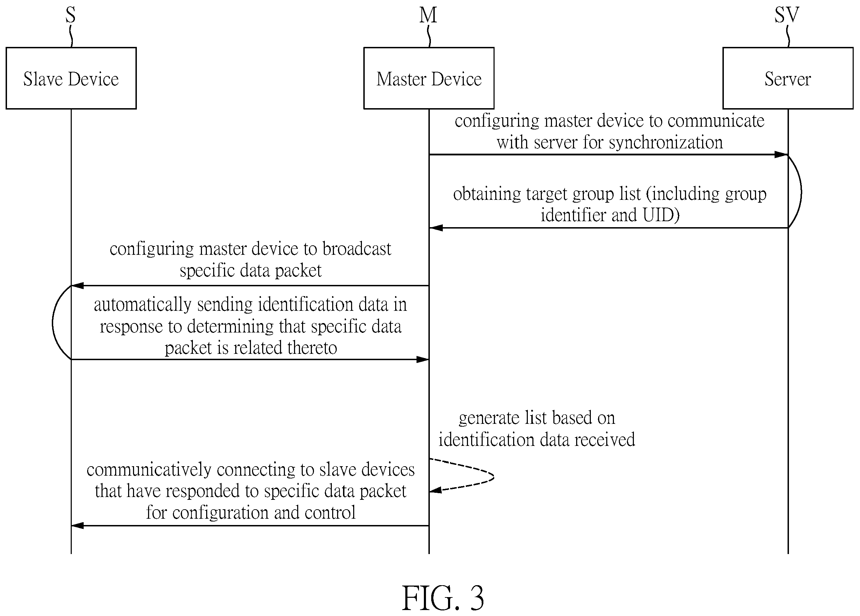

FIG. 2 is a flowchart of the automatic configuration method according to one embodiment of the present invention, and FIG. 3 is a signal transmission flowchart of the automatic configuration method according to one embodiment of the present invention. Referring to FIG. 2 and FIG. 3, one embodiment of the present invention provides an automatic configuration method, which at least includes the following steps.

Step S10: configuring the master device to obtain a target group list from a server. In this step, the automatic configuration system 100 can further include a server SV, and the master device M can be communicatively connected to the server SV (e.g., via the Internet). The target group list L can be stored in a database D of the server SV, and the master device M can periodically update the target group list L from a local end on the server SV. It should be noted that the master device M is not limited to obtaining the target group list L from the server SV, and the target group list L can also be stored in the master device M or in other electronic devices that are communicatively connected to the master device M.

It should be noted that in the target group list L, multiple slave devices S can be divided into one or more groups, and the target group list L includes group information and a unique identifier (UID) corresponding to each slave device S, and the group information can include a group identifier corresponding to the group of the slave devices S.

For example, given a total of nine slave devices S that are divided into three groups, and the target grouping list L can be shown in Table 1 below:

**Table 1:**

| Group A | Group B | Group C |
|---|---|---|
| Slave device 1 | Slave device 4 | Slave device 7 |
| UID : ID1 | UID : ID101 | UID : ID301 |
| Slave device 2 | Slave device 5 | Slave device 8 |
| UID : ID2 | UID : ID102 | UID : ID302 |
| Slave device 3 | Slave device 6 | Slave device 9 |
| UID : ID3 | UID : ID103 | UID : ID303 |

In Table 1, group A, group B, and group C can be represented by corresponding group identifiers, respectively, and in addition to group information and UID, the target group list L or database D can also store device information of each of the slave devices S, such as the specification and supported communication protocols of the slave device S. When the master device M obtains the target group list L from the server SV, the above information can also be updated synchronously.

Step S 11: configuring the master device to broadcast a specific data packet according to the target group list.

In step S11, the master device M can select a target group from the groups (e.g., group A, group B, group C), generate the specific data packet according to the target group, and broadcast the specific data packet. The specific data packet can be transmitted under the premise of complying with the Bluetooth profile. For example, the master device M can broadcast the specific data packet through advertising packets (protocol data units (PDUs)), so as to let the slave device S know whether or not the master device M can establish a connection. In addition to the above manners, the master device M can also use Bluetooth Auracast^{™}, which is a one-to-many Bluetooth connection similar in nature to traditional radio broadcasting. In Bluetooth Auracast, compatible Bluetooth devices can listen (and unlisten) for broadcasts at any time without pairing, such that Bluetooth Auracast can also be used to transmit the specific data packets and establish a connection.

In addition, the specific data packet can include a group identifier corresponding to the target group. For example, when the target group is group A, the specific data packet can include a group identifier corresponding to group A. In general, the maximum length of the advertising data can be 31 bytes, but after Bluetooth 5.0 was announced, the maximum length can be 254 bytes.

Step S12: configuring each of the slave devices to, in response to receiving the specific data packet and determining that the specific data packet is related thereto, automatically send identification data. Similarly, the slave devices S can also broadcast identification data via the PDU.

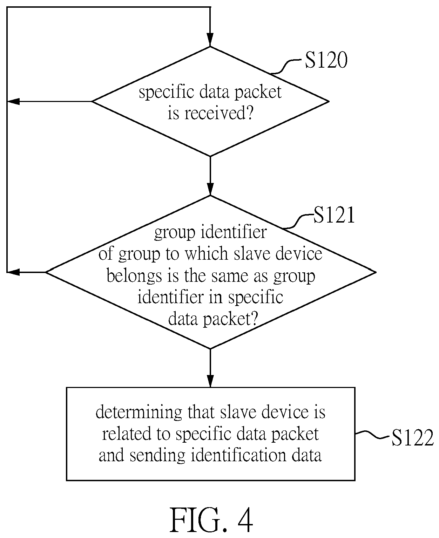

Reference is made to FIG. 4, which is a detailed flowchart of step S12. As shown in FIG. 4, in some embodiments, step S12 can include configuring each of the slave devices S to perform the following steps:
Step S120: determining whether a specific data packet is received.

In response to determining in step S120 that the specific data packet is received, the automatic configuration method proceeds to step S121: determining whether the group identifier of the group to which the slave device belongs is the same as the group identifier in the specific data packet.

In step S121, the slave device S can parse the specific data packet to obtain the group identifier therein, and then compare the group identifier with the group identifier stored in the slave device S to determine whether the two are the same. If the two are the same, it means that the master device M intends to connect to the slave device S of the group to which it belongs.

In other embodiments, for security reasons, the master device M can encrypt the group identifier using a symmetric encryption algorithm or an asymmetric encryption algorithm, and the slave device S can be configured to execute a corresponding decryption algorithm to decrypt the encrypted data in the specific data packet, so as to obtain the group identifier for comparison. However, the above are only examples, and the present invention is not limited thereto.

In response to determining in step S 120 that the specific data packet is not received, step S 120 is repeatedly executed.

In response to determining in step S121 that the group identifier of the group to which the slave device belongs is the same as the group identifier in the specific data packet, the automatic configuration method proceeds to step S122: determining that the slave device is related to the specific data packet and sending the identification data. In step S122, the identification data can be, for example, a UID of the slave device S itself, and can be encrypted or unencrypted.

In response to determining in step S121 that the group identifier of the group to which the slave device belongs is different from the group identifier in the specific data packet, the automatic configuration method returns to step S120.

Referring to FIG. 2 again, the automatic configuration method proceeds to step S13: configuring the master device to generate a list according to the received identification data.

In step S13, the master device M can compare the received identification data with the target group list L, especially the UID in the identification data. When the master device M determines that the UID in the identification data matches data in the target group list L, the UID can be used to establish the list.

Furthermore, the list generated by the master device M can be used to indicate an operation status of each slave device S in the target group. For example, the operation status can include an offline status and an online status. The online status means that the master device M has received the identification data from the slave device S, and the offline status means that the slave device S is in the target group but not in a communication range of the master device M, causing the slave device S to fail to receive the specific data packet and respond to the identification data.

Step S14: configuring the master device to communicatively connect with each of the slave devices that have responded to the specific data packet according to the list.

By executing the above steps, one or more specific slave devices S can be selected from multiple slave devices S and automatically connected without having to be manually connected one by one. For example, in a scenario where users use multiple slave devices S as a group, when police officers are organized into teams and perform duties, by utilizing the automatic configuration system 100 of the present invention, there is no need to manually configure and control the body camera on each police officer one by one. The configuration and control can be performed directly after establishing a connection with the body camera on each police officer in the team through the master device M.

Therefore, in response to the master device M communicatively connecting with each of the slave devices that has responded, the automatic configuration method proceeds to step S 15: transmitting at least one of a configuration command or a control command according to the operation status of each of the slave devices.

Taking the slave devices S being image capturing devices as an example, the configuration command can be used to set or adjust image capturing parameters of the image capturing device, such as focal length, white balance, International Standards Organization (ISO) value and the like, and the control command can include a start capturing command or a stop capturing command, which can be used to control the image capturing device to start recording or stop recording.

### [Beneficial Effects of the Embodiments]

In conclusion, in the automatic configuration system and the automatic configuration method provided by the present invention, a solution is designed for the integration of specific hardware and software of networked devices in conjunction with devices using real-time wireless broadcast technology. The aim is to filter specific cameras, more than one at a time. This resolves the limitation of needing to manually set and control individual machines, allowing on-duty officers to automatically configure by squad units.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its scope as defined in the appended claims.

## Claims

1. An automatic configuration method, comprising:
configuring a master device (M) to broadcast a specific data packet according to a target group list (L), wherein the target group list (L) divides a plurality of slave devices (S) into one or more groups;
configuring each of the plurality of slave devices (S) to, in response to receiving the specific data packet and determining that the specific data packet is related thereto, automatically send identification data;
configuring the master device (M) to generate a list according to the identification data; and
configuring the master device (M) to communicatively connect with each of the plurality of slave devices (S) that have responded to the specific data packet according to the list;
wherein the list indicates an operation status of each of the plurality of slave devices (S) in the target group;
wherein the method further comprises configuring the master device (M) to, in response to the communicatively connecting with each of the plurality of slave devices (S), transmit a control command according to the operation status of each of the plurality of slave devices (S), wherein the plurality of slave devices (S) are a plurality of image capturing devices; and
wherein the control command comprises a start capturing command or a stop capturing command.

2. The automatic configuration method according to claim **1,** further comprising: configuring the master device (M) to obtain the target group list (L) from a server (SV).

3. The automatic configuration method according to claim **1,** wherein the target group list (L) comprises group information and a unique identifier for each of the plurality of slave devices (S).

4. The automatic configuration method according to claim 3, wherein a process of configuring the master device (M) to broadcast the specific data packet according to the target group list (L) comprises: configuring the master device (M) to:
select a target group from the one or more groups, generate the specific data packet broadcast according to the target group and broadcast the specific data packet, wherein the specific data packet comprises the group information corresponding to the target group.

5. The automatic configuration method according to claim 4, further comprising: configuring each of the plurality of slave devices (S) to:
in response to receiving the specific data packet, determine whether the group information of a group to which the slave device (S) belongs is same as the group information in the specific data packet; and
in response to determining that the group information of the group to which the slave device (S) belongs is same as the group information in the specific data packet, determine that the slave device (S) is related to the specific data packet and send the identification data.

6. The automatic configuration method according to claim 4, further comprising:
configuring the master device (M) to, in response to the communicatively connecting with each of the plurality of slave devices (S), transmit a configuration command according to the operation status of each of the plurality of slave devices (S).

7. The automatic configuration method according to claim 6, wherein the configuration command is used to set image capturing parameters of the corresponding slave device (S).

8. An automatic configuration system (100), comprising:
a master device (M) configured to broadcast a specific data packet according to a target group list (L); and
a plurality of slave devices (S) divided into one or more groups according to the target group list (L), wherein each of the plurality of slave devices (S) is configured to automatically send identification data in response to receiving the specific data packet and determining that the specific data packet is related thereto;
wherein the master device (M) is configured to generate a list according to the identification data, and communicatively connect with each of the plurality of slave devices (S) that have responded to the specific data packet according to the list;
wherein the list indicates an operation status of each of the plurality of slave devices (S) in the target group;
wherein the master device (M) is configured to, in response to the communicatively connecting with each of the plurality of slave devices (S), transmit a control command according to the operation status of each of the plurality of slave devices (S), wherein the plurality of slave devices (S) are a plurality of image capturing devices; and
wherein the control command comprises a start capturing command or a stop capturing command.

9. The automatic configuration system (100) according to claim 8, further comprising a server (SV) communicatively connected to the master device (M), wherein the master device (M) is configured to obtain the target group list (L) from the server (SV), wherein the target group list (L) comprises group information and a unique identifier for each of the plurality of slave devices (S).

10. The automatic configuration system (100) according to claim 9, wherein the master device (M) is further configured to:
select a target group from the one or more groups, generate the specific data packet broadcast according to the target group and broadcast the specific data packet, wherein the specific data packet comprises the group information corresponding to the target group.

11. The automatic configuration system (100) according to claim 10, wherein each of the plurality of slave devices (S) is further configured to:
in response to receiving the specific data packet, determine whether the group information of a group to which the slave device (S) belongs is the same as the group information in the specific data packet; and
in response to determining that the group information of the group to which the slave device (S) belongs is the same as the group information in the specific data packet, determine that the slave device (S) is related to the specific data packet and send the identification data.

12. The automatic configuration system (100) according to claim 10, wherein the master device (M) is configured to, in response to the communicatively connecting with each of the plurality of slave devices (S), transmit a configuration command according to the operation status of each of the plurality of slave devices (S).

13. The automatic configuration system (100) according to claim 12, wherein the configuration command is used to set image capturing parameters of the corresponding slave device (S).

## Patentansprüche

1. Automatisches Konfigurationsverfahren, aufweisend:
Konfigurieren einer Master-Vorrichtung (M), um ein spezifisches Datenpaket gemäß einer Zielgruppenliste (L) als Broadcast zu übertragen, wobei die Zielgruppenliste (L) eine Mehrzahl von Slave-Vorrichtungen (S) in eine oder mehrere Gruppen unterteilt;
Konfigurieren jeder der Mehrzahl von Slave-Vorrichtungen (S), um als Reaktion auf den Empfang des spezifischen Datenpakets und Bestimmen, dass das spezifische Datenpaket die jeweilige Slave-Vorrichtung (S) betrifft, automatisch Identifikationsdaten zu senden;
Konfigurieren der Master-Vorrichtung (M), um gemäß den Identifikationsdaten eine Liste zu erzeugen; und
Konfigurieren der Master-Vorrichtung (M), um gemäß der Liste eine Kommunikationsverbindung mit jeder der Mehrzahl von Slave-Vorrichtungen (S) herzustellen, die auf das spezifische Datenpaket geantwortet haben;
wobei die Liste einen Betriebsstatus jeder der Mehrzahl von Slave-Vorrichtungen (S) in der Zielgruppe angibt;
wobei das Verfahren ferner das Konfigurieren der Master-Vorrichtung (M) aufweist, um als Reaktion auf das Herstellen der Kommunikationsverbindung mit jeder der Mehrzahl von Slave-Vorrichtungen (S) gemäß dem Betriebsstatus jeder der Mehrzahl von Slave-Vorrichtungen (S) einen Steuerbefehl zu übertragen, wobei die Mehrzahl von Slave-Vorrichtungen (S) eine Mehrzahl von Bilderfassungsvorrichtungen sind; und
wobei der Steuerbefehl einen Befehl zum Starten der Erfassung oder einen Befehl zum Stoppen der Erfassung aufweist.

2. Automatisches Konfigurationsverfahren gemäß Anspruch 1, ferner aufweisend:
Konfigurieren der Master-Vorrichtung (M), um die Zielgruppenliste (L) von einem Server (SV) zu erhalten.

3. Automatisches Konfigurationsverfahren gemäß Anspruch 1, wobei die Zielgruppenliste (L) Gruppeninformationen und eine eindeutige Kennung für jede der Mehrzahl von Slave-Vorrichtungen (S) aufweist.

4. Automatisches Konfigurationsverfahren gemäß Anspruch 3, wobei ein Prozess des Konfigurierens der Master-Vorrichtung (M), um das spezifische Datenpaket gemäß der Zielgruppenliste (L) als Broadcast zu übertragen, aufweist: Konfigurieren der Master-Vorrichtung (M), um:
eine Zielgruppe aus der einen oder den mehreren Gruppen auszuwählen, das gemäß der Zielgruppe als Broadcast zu übertragende spezifische Datenpaket zu erzeugen und das spezifische Datenpaket als Broadcast zu übertragen, wobei das spezifische Datenpaket die der Zielgruppe entsprechenden Gruppeninformationen aufweist.

5. Automatisches Konfigurationsverfahren gemäß Anspruch 4, ferner aufweisend: Konfigurieren jeder der Mehrzahl von Slave-Vorrichtungen (S), um:
als Reaktion auf den Empfang des spezifischen Datenpakets zu bestimmen, ob die Gruppeninformationen einer Gruppe, zu der die Slave-Vorrichtung (S) gehört, mit den Gruppeninformationen in dem spezifischen Datenpaket übereinstimmen; und
als Reaktion auf das Bestimmen, dass die Gruppeninformationen der Gruppe, zu der die Slave-Vorrichtung (S) gehört, mit den Gruppeninformationen in dem spezifischen Datenpaket übereinstimmen, festzustellen, dass das spezifische Datenpaket die Slave-Vorrichtung (S) betrifft, und die Identifikationsdaten zu senden.

6. Automatisches Konfigurationsverfahren gemäß Anspruch 4, ferner aufweisend:
Konfigurieren der Master-Vorrichtung (M), um als Reaktion auf das Herstellen der Kommunikationsverbindung mit jeder der Mehrzahl von Slave-Vorrichtungen (S) gemäß dem Betriebsstatus jeder der Mehrzahl von Slave-Vorrichtungen (S) einen Konfigurationsbefehl zu übertragen.

7. Automatisches Konfigurationsverfahren gemäß Anspruch 6, wobei der Konfigurationsbefehl verwendet wird, um Bilderfassungsparameter der entsprechenden Slave-Vorrichtung (S) einzustellen.

8. Automatisches Konfigurationssystem (100), aufweisend:
eine Master-Vorrichtung (M), die konfiguriert ist, um ein spezifisches Datenpaket gemäß einer Zielgruppenliste (L) als Broadcast zu übertragen; und
eine Mehrzahl von Slave-Vorrichtungen (S), die gemäß der Zielgruppenliste (L) in eine oder mehrere Gruppen unterteilt sind, wobei jede der Mehrzahl von Slave-Vorrichtungen (S) konfiguriert ist, um als Reaktion auf den Empfang des spezifischen Datenpakets und Bestimmen, dass das spezifische Datenpaket die jeweilige Slave-Vorrichtung (S) betrifft, automatisch Identifikationsdaten zu senden;
wobei die Master-Vorrichtung (M) konfiguriert ist, um gemäß den Identifikationsdaten eine Liste zu erzeugen und gemäß der Liste eine Kommunikationsverbindung mit jeder der Mehrzahl von Slave-Vorrichtungen (S) herzustellen, die auf das spezifische Datenpaket geantwortet haben;
wobei die Liste einen Betriebsstatus jeder der Mehrzahl von Slave-Vorrichtungen (S) in der Zielgruppe angibt;
wobei die Master-Vorrichtung (M) konfiguriert ist, um als Reaktion auf das Herstellen der Kommunikationsverbindung mit jeder der Mehrzahl von Slave-Vorrichtungen (S) gemäß dem Betriebsstatus jeder der Mehrzahl von Slave-Vorrichtungen (S) einen Steuerbefehl zu übertragen, wobei die Mehrzahl von Slave-Vorrichtungen (S) eine Mehrzahl von Bilderfassungsvorrichtungen sind; und
wobei der Steuerbefehl einen Befehl zum Starten der Erfassung oder einen Befehl zum Stoppen der Erfassung aufweist.

9. Automatisches Konfigurationssystem (100) gemäß Anspruch 8, ferner aufweisend einen Server (SV), der in Kommunikationsverbindung mit der Master-Vorrichtung (M) steht, wobei die Master-Vorrichtung (M) konfiguriert ist, um die Zielgruppenliste (L) von dem Server (SV) zu erhalten, wobei die Zielgruppenliste (L) Gruppeninformationen und eine eindeutige Kennung für jede der Mehrzahl von Slave-Vorrichtungen (S) aufweist.

10. Automatisches Konfigurationssystem (100) gemäß Anspruch 9, wobei die Master-Vorrichtung (M) ferner konfiguriert ist, um:
eine Zielgruppe aus der einen oder den mehreren Gruppen auszuwählen, das gemäß der Zielgruppe als Broadcast zu übertragende spezifische Datenpaket zu erzeugen und das spezifische Datenpaket als Broadcast zu übertragen, wobei das spezifische Datenpaket die der Zielgruppe entsprechenden Gruppeninformationen aufweist.

11. Automatisches Konfigurationssystem (100) gemäß Anspruch 10, wobei jede der Mehrzahl von Slave-Vorrichtungen (S) ferner konfiguriert ist, um:
als Reaktion auf den Empfang des spezifischen Datenpakets zu bestimmen, ob die Gruppeninformationen einer Gruppe, zu der die Slave-Vorrichtung (S) gehört, mit den Gruppeninformationen in dem spezifischen Datenpaket übereinstimmen; und
als Reaktion auf das Bestimmen, dass die Gruppeninformationen der Gruppe, zu der die Slave-Vorrichtung (S) gehört, mit den Gruppeninformationen in dem spezifischen Datenpaket übereinstimmen, zu bestimmen, dass das spezifische Datenpaket die Slave-Vorrichtung (S) betrifft, und die Identifikationsdaten zu senden.

12. Automatisches Konfigurationssystem (100) gemäß Anspruch 10, wobei die Master-Vorrichtung (M) konfiguriert ist, um als Reaktion auf das Herstellen der Kommunikationsverbindung mit jeder der Mehrzahl von Slave-Vorrichtungen (S) gemäß dem Betriebsstatus jeder der Mehrzahl von Slave-Vorrichtungen (S) einen Konfigurationsbefehl zu übertragen.

13. Automatisches Konfigurationssystem (100) gemäß Anspruch 12, wobei der Konfigurationsbefehl verwendet wird, um Bilderfassungsparameter der entsprechenden Slave-Vorrichtung (S) einzustellen.

## Revendications

1. Procédé de configuration automatique, comprenant :
la configuration d'un dispositif maître (M) pour diffuser un paquet de données spécifique selon une liste de groupes cibles (L), dans lequel la liste de groupes cibles (L) répartit une pluralité de dispositifs esclaves (S) en un ou plusieurs groupes ;
la configuration de chacun de la pluralité de dispositifs esclaves (S) pour, en réponse à la réception du paquet de données spécifique et à la détermination que le paquet de données spécifique le concerne, envoyer automatiquement des données d'identification ;
la configuration du dispositif maître (M) pour générer une liste selon les données d'identification ; et
la configuration du dispositif maître (M) pour établir une connexion de communication avec chacun de la pluralité de dispositifs esclaves (S) ayant répondu au paquet de données spécifique selon la liste ;
dans lequel la liste indique un état de fonctionnement de chacun de la pluralité de dispositifs esclaves (S) dans le groupe cible ;
dans lequel le procédé comprend en outre la configuration du dispositif maître (M) pour, en réponse à l'établissement de la connexion de communication avec chacun de la pluralité de dispositifs esclaves (S), transmettre une commande de contrôle selon l'état de fonctionnement de chacun de la pluralité de dispositifs esclaves (S), dans lequel la pluralité de dispositifs esclaves (S) est une pluralité de dispositifs de capture d'images ; et
dans lequel la commande de contrôle comprend une commande de démarrage de capture ou une commande d'arrêt de capture.

2. Procédé de configuration automatique selon la revendication 1, comprenant en outre :
la configuration du dispositif maître (M) pour obtenir la liste de groupes cibles (L) à partir d'un serveur (SV).

3. Procédé de configuration automatique selon la revendication 1, dans lequel la liste de groupes cibles (L) comprend des informations de groupe et un identifiant unique pour chacun de la pluralité de dispositifs esclaves (S).

4. Procédé de configuration automatique selon la revendication 3, dans lequel un processus de configuration du dispositif maître (M) pour diffuser le paquet de données spécifique selon la liste de groupes cibles (L) comprend : la configuration du dispositif maître (M) pour :
sélectionner un groupe cible parmi le ou les groupes, générer le paquet de données spécifique diffusé selon le groupe cible et diffuser le paquet de données spécifique, dans lequel le paquet de données spécifique comprend les informations de groupe correspondant au groupe cible.

5. Procédé de configuration automatique selon la revendication 4, comprenant en outre : la configuration de chacun de la pluralité de dispositifs esclaves (S) pour :
en réponse à la réception du paquet de données spécifique, déterminer si les informations de groupe d'un groupe auquel appartient le dispositif esclave (S) sont identiques aux informations de groupe dans le paquet de données spécifique ; et
en réponse à la détermination que les informations de groupe du groupe auquel appartient le dispositif esclave (S) sont identiques aux informations de groupe dans le paquet de données spécifique, déterminer que le dispositif esclave (S) est concerné par le paquet de données spécifique et envoyer les données d'identification.

6. Procédé de configuration automatique selon la revendication 4, comprenant en outre :
la configuration du dispositif maître (M) pour, en réponse à l'établissement de la connexion de communication avec chacun de la pluralité de dispositifs esclaves (S),
transmettre une commande de configuration selon l'état de fonctionnement de chacun de la pluralité de dispositifs esclaves (S).

7. Procédé de configuration automatique selon la revendication 6, dans lequel la commande de configuration est utilisée pour définir des paramètres de capture d'images du dispositif esclave (S) correspondant.

8. Système de configuration automatique (100), comprenant :
un dispositif maître (M) configuré pour diffuser un paquet de données spécifique selon une liste de groupes cibles (L) ; et
une pluralité de dispositifs esclaves (S) répartis en un ou plusieurs groupes selon la liste de groupes cibles (L), dans lequel chacun de la pluralité de dispositifs esclaves (S) est configuré pour envoyer automatiquement des données d'identification en réponse à la réception du paquet de données spécifique et à la détermination que le paquet de données spécifique le concerne ;
dans lequel le dispositif maître (M) est configuré pour générer une liste selon les données d'identification et établir une connexion de communication avec chacun de la pluralité de dispositifs esclaves (S) ayant répondu au paquet de données spécifique selon la liste ;
dans lequel la liste indique un état de fonctionnement de chacun de la pluralité de dispositifs esclaves (S) dans le groupe cible ;
dans lequel le dispositif maître (M) est configuré pour, en réponse à l'établissement de la connexion de communication avec chacun de la pluralité de dispositifs esclaves (S), transmettre une commande de contrôle selon l'état de fonctionnement de chacun de la pluralité de dispositifs esclaves (S), dans lequel la pluralité de dispositifs esclaves (S) est une pluralité de dispositifs de capture d'images ; et
dans lequel la commande de contrôle comprend une commande de démarrage de capture ou une commande d'arrêt de capture.

9. Système de configuration automatique (100) selon la revendication 8, comprenant en outre un serveur (SV) relié en communication au dispositif maître (M), dans lequel le dispositif maître (M) est configuré pour obtenir la liste de groupes cibles (L) à partir du serveur (SV), dans lequel la liste de groupes cibles (L) comprend des informations de groupe et un identifiant unique pour chacun de la pluralité de dispositifs esclaves (S).

10. Système de configuration automatique (100) selon la revendication 9, dans lequel le dispositif maître (M) est en outre configuré pour :
sélectionner un groupe cible parmi le ou les groupes, générer le paquet de données spécifique diffusé selon le groupe cible et diffuser le paquet de données spécifique, dans lequel le paquet de données spécifique comprend les informations de groupe correspondant au groupe cible.

11. Système de configuration automatique (100) selon la revendication 10, dans lequel chacun de la pluralité de dispositifs esclaves (S) est en outre configuré pour :
en réponse à la réception du paquet de données spécifique, déterminer si les informations de groupe d'un groupe auquel appartient le dispositif esclave (S) sont identiques aux informations de groupe dans le paquet de données spécifique ; et
en réponse à la détermination que les informations de groupe du groupe auquel appartient le dispositif esclave (S) sont identiques aux informations de groupe dans le paquet de données spécifique, déterminer que le dispositif esclave (S) est concerné par le paquet de données spécifique et envoyer les données d'identification.

12. Système de configuration automatique (100) selon la revendication 10, dans lequel le dispositif maître (M) est configuré pour, en réponse à l'établissement de la connexion de communication avec chacun de la pluralité de dispositifs esclaves (S), transmettre une commande de configuration selon l'état de fonctionnement de chacun de la pluralité de dispositifs esclaves (S).

13. Système de configuration automatique (100) selon la revendication 12, dans lequel la commande de configuration est utilisée pour définir des paramètres de capture d'images du dispositif esclave (S) correspondant.
